# EUROPEAN PATENT SPECIFICATION

(11) **EP 3 013 585 B1**
(45) Date of publication and mention of the grant of the patent: **02.08.2017**
(21) Application number: 14732220.0
(22) Date of filing: 24.06.2014
(51) Int. Cl.: B32B 27/36

(54) **MULTILAYER FILM COMPRISING BIOPOLYMERS**
MEHRSCHICHTFOLIE, ENTHALTEND BIOPOLYMERE
FILM MULTICOUCHE COMPRENANT DES BIOPOLYMÈRES

(30) Priority: 27.06.2013 EP 13173935
(43) Date of publication of application: 04.05.2016
(73) Proprietor: Futerro S.A., 7760 Escanaffles (BE)
(72) Inventor: COUPIN, Thierry, B-7141 Carnieres (BE)
(74) Representative: Pronovem
(86) International application number: PCT/EP2014/063310
(87) International publication number: WO 2014/206996

(56) References cited:
- EP-A1- 1 837 363
- WO-A1-2014/069379
- WO-A2-2011/158240
- US-A1- 2010 323 196
- US-A1- 2011 244 186
- US-A1- 2012 232 191
- "Biodegradable polymers - inspired by nature Ecoflex, Ecovio", , 1 October 2008 (2008-10-01), XP055060768, Retrieved from the Internet: URL:http://www.bioplastics.basf.com/pdf/Ec oflex-Ecovio_Brochure_2008.pdf [retrieved on 2013-04-23]

## Description

### FIELD OF THE INVENTION

The invention pertains to a multilayer film comprising biopolymers such as polylactic acid (PLA), its uses and process of preparation. The present invention further comprises a substrate coated with said multilayer film.

### BACKGROUND OF THE INVENTION

Film structures made from petroleum-based products originating from fossil fuels are often used in flexible packages where there is a need for its advantageous barrier, sealant, and graphics-capability properties. Film structures can also be used for laminating substrates such as metal plates.

Generally for coating a metal sheet with a film, a thermoplastic film is heat-pressed on the metal sheet directly or with the intervention of an adhesive. Particularly, the use of the thermoplastic film is advantageous, because the resin can be easily handled with an excellent operability and the resin film has a highly uniform thickness.

The film for use in such an application should simultaneously satisfy various property requirements. That is, the film is required to have an excellent heat laminatability with respect to the metal sheet; to ensure an excellent workability without film separation and occurrence of cracks and pinholes in a metal working process; to be free from embrittlement when being subjected to an embossing process, and when being stored for a long period of time.

Polyvinyl chloride (PVC) is the third most widely produced plastic; its relative low cost and high mechanical and chemical resistance, have resulted in a wide variety of applications for this polymer, which range from construction, to clothing. Pure PVC is a rigid material, but with the addition of plasticizers, it can become flexible enough to form films, which can, for example, be used for metal coating.

Polylactic acid (PLA) is a biodegradable polymer combining the aptitude to be produced based on renewable raw materials and, at the end of its life, to be compostable. PLA is a synthetic aliphatic polyester derived from renewable resources, such a corn, sugar beet and cassava, which can ultimately be degraded under industrial composting conditions.

PLA is known to be very rigid but to show a brittle break, which can result in low impact strength products or articles. Impact resistance of PLA can be modified by using existing polymeric impact modifiers. For example a liquid plasticizer can be used at high content to improve impact resistance of PLA, however during the life time of the PLA blend, there is migration of the plasticizer.

Hence, there is a demand for immediate development and improvement of a film suitable for the film-laminated sheets.

### SUMMARY OF THE INVENTION

According to a first aspect of the present invention, a multilayer film is provided. The multilayer film comprises:
- at least one layer A comprising poly(butylene adipate-co-terephthalate) (PBAT) and an aliphatic polyester selected from polylactic acid (PLA), polyhydroxyalkanoate, polycaprolactone, and polyesteramides; and
- at least one layer B: comprising poly(butylene adipate-co-terephthalate) (PBAT).

Preferably, the present invention provides a multilayer film comprising:
- at least one layer A comprising poly(butylene adipate-co-terephthalate) and an aliphatic polyester selected from polylactic acid, polyhydroxyalkanoate, polycaprolactone, and polyesteramides; and
- at least one layer B comprising poly(butylene adipate-co-terephthalate),
wherein said layer A comprises at least 15% by weight of poly(butylene adipate-co-terephthalate) based on the total weight of layer A and at least 60% by weight of aliphatic polyester based on the total weight of layer A; and
wherein said layer B comprises from 70 to 100% by weight of poly(butylene adipate-co-terephthalate) based on the total weight of layer B.

The present inventors have now found in a surprising way that by using a blend of poly(butylene adipate-co-terephthalate) and an aliphatic polyester, for example polylactic acid; a multilayer film can be produced, which possesses good mechanical properties. In addition, the multilayer film can be easily coated or laminated on substrates such as metal substrates.

According to a second aspect, the present invention also encompasses a process for preparing a multilayer film according to the first aspect of the invention; comprising the step of co-extruding at least one layer A with at least one layer B to form said multilayer film, wherein said least one layer A comprises poly(butylene adipate-co-terephthalate) and an aliphatic polyester selected from polylactic acid, polyhydroxyalkanoate, polycaprolactone, and polyesteramides; and wherein said at least one layer B comprises poly(butylene adipate-co-terephthalate).

Preferably, the present invention further provides a process for preparing a multilayer film according to the first aspect of the present invention comprising the step of co-extruding at least one layer A with at least one layer B to form said multilayer film, wherein said least one layer A comprises poly(butylene adipate-co-terephthalate) and an aliphatic polyester selected from polylactic acid, polyhydroxyalkanoate, polycaprolactone, and polyesteramides; and wherein said at least one layer B comprises poly(butylene adipate-co-terephthalate); and
wherein said layer A comprises at least 15% by weight of poly(butylene adipate-co-terephthalate) based on the total weight of layer A and at least 60% by weight of aliphatic polyester based on the total weight of layer A; and
wherein said layer B comprises from 70 to 100% by weight of poly(butylene adipate-co-terephthalate) based on the total weight of layer B.

According to a third aspect, the present invention also encompasses the use of a multilayer film according to the first aspect of the invention, as lamination film, cling film, stretch film, shrink film, bags, liner and diaper film.

According to a fourth aspect, the present invention also encompasses the use of a multilayer film according to the first aspect of the invention, for coating and/or laminating a substrate.

According to a fifth aspect, the present invention also encompasses a substrate coated with a multilayer film, according to the first aspect of the invention.

Preferred embodiments of the invention are disclosed in the detailed description and appended claims. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a layer" means one layer or more than one layer.

Unless defined otherwise, all technical and scientific terms used herein have the same meaning as is commonly understood by one of skill in the art. All publications referenced herein are incorporated by reference thereto.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0).

Any numerical range recited herein is intended to include all sub-ranges subsumed therein.

Preferred statements (features) and embodiments of this invention are set herein below. Each statements and embodiments of the invention so defined may be combined with any other statement and/or embodiments unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below numbered statements and embodiments 1 to 41, with any other statement and/or embodiments.
1. A multilayer film comprising:
   - at least one layer A comprising poly(butylene adipate-co-terephthalate) and an aliphatic polyester selected from polylactic acid, polyhydroxyalkanoate, polycaprolactone, and polyesteramides; and
   - at least one layer B comprising poly(butylene adipate-co-terephthalate).
2. The multilayer film according to statement 1, wherein said aliphatic polyester in layer A is a polylactic acid.
3. The multilayer film according to statement 1 or 2, wherein said layer A comprises at least 10% by weight of poly(butylene adipate-co-terephthalate) based on the total weight of layer A.
4. The multilayer film according to any one of statements 1 to 3, wherein said layer A comprises at least 50% by weight of aliphatic polyester based on the total weight of layer A.
5. The multilayer film according to any one of statements 1 to 4, wherein said layer A comprises at least 15 % by weight of poly(butylene adipate-co-terephthalate) based on the total weight of layer A and at least 60% by weight of aliphatic polyester based on the total weight of layer A.
6. The multilayer film according to any one of statements 1 to 5, wherein said layer B further comprises one or more polymers selected from an aliphatic polyester; co- or ter-polymer comprising ethylene or styrene monomer, and unsaturated anhydride-, epoxide- or carboxylic acid-containing monomer; and wherein said aliphatic polyester is selected from poly(lactic acid), polyhydroxyalkanoate, polycaprolactone, and polyesteramides.
7. The multilayer film according to statement 6, wherein said aliphatic polyester in layer B is polylactic acid.
8. The multilayer film according to any one of statements 1 to 7, wherein said layer B comprises from 50 to 100% by weight of poly(butylene adipate-co-terephthalate) based on the total weight of layer B.
9. The multilayer film according to any one of statements 1 to 8, wherein layer A further comprises one or more additives selected from the group comprising pigments, dyes, impact modifiers, adhesion promoters, plasticizers, fillers, antioxidants, UV blockers, antistatic agents, antiblocking agents, or nucleating agent.
10. A process for preparing a multilayer film according to any one of statements 1 to 9; comprising the step of co-extruding at least one layer A with at least one layer B to form said multilayer film, wherein said least one layer A comprises poly(butylene adipate-co-terephthalate) and an aliphatic polyester selected from polylactic acid , polyhydroxyalkanoate, polycaprolactone, and polyesteramides; and wherein said at least one layer B comprises poly(butylene adipate-co-terephthalate).
11. Use of at least one multilayer film according to any one of statements 1 to 9 as lamination films, cling films, stretch films, shrink films, bags, liners and diaper films.
12. Use of at least one multilayer film according to any one of statements 1 to 9, for coating and/or laminating a substrate.
13. A substrate coated with at least one multilayer film according to any one of statements 1 to 9.
14. The substrate according to statement 13, further comprising an adhesive layer between said multilayer film and said substrate.
15. The substrate according to statement 14 wherein said adhesive is selected from the group comprising epoxy adhesive, polyurethane adhesive; nitro-cellulosic adhesive; or polyester adhesive.
16. A multilayer film comprising:
   - at least one layer A comprising poly(butylene adipate-co-terephthalate) and an aliphatic polyester selected from polylactic acid, polyhydroxyalkanoate, polycaprolactone, and polyesteramides; and
   - at least one layer B comprising poly(butylene adipate-co-terephthalate),
   wherein said layer A comprises at least 15% by weight of poly(butylene adipate-co-terephthalate) based on the total weight of layer A and at least 60% by weight of aliphatic polyester based on the total weight of layer A; and
   wherein said layer B comprises from 70 to 100% by weight of poly(butylene adipate-co-terephthalate) based on the total weight of layer B.
17. A multilayer film comprising:
   - at least one layer A comprising at least 15% by weight of poly(butylene adipate-co-terephthalate) based on the total weight of layer A, and at least 60% by weight of an aliphatic polyester based on the total weight of layer A, wherein said aliphatic polyester is selected from polylactic acid, polyhydroxyalkanoate, polycaprolactone, and polyesteramides; and
   - at least one layer B comprising from 70 to 100% by weight of poly(butylene adipate-co-terephthalate) based on the total weight of layer B.
18. The multilayer film according to any one of statements 1 to 9, 16 to 17, wherein said aliphatic polyester in layer A is a polylactic acid.
19. The multilayer film according to any one of statements 1 to 9, 16 to 18, wherein said layer B further comprises one or more polymers selected from an aliphatic polyester; co- or ter-polymer comprising ethylene or styrene monomer, and unsaturated anhydride-, epoxide- or carboxylic acid-containing monomer; and wherein said aliphatic polyester is selected from poly(lactic acid), polyhydroxyalkanoate, polycaprolactone, and polyesteramides.
20. The multilayer film according to any one of statements 3 to 9, 19, wherein said aliphatic polyester in layer B is polylactic acid.
21. The multilayer film according to any one of statements 1 to 9, 16 to 20, wherein said layer B comprises from 80 to 100% by weight of poly(butylene adipate-co-terephthalate) based on the total weight of layer B.
22. The multilayer film according to any one of statements 1 to 9, 16 to 21, wherein layer A further comprises one or more additives selected from the group comprising pigments, dyes, impact modifiers, adhesion promoters, plasticizers, fillers, antioxidants, UV blockers, antistatic agents, antiblocking agents, or nucleating agent.
23. A process for preparing a multilayer film according to any one of statements 1 to 9, 16 to 22; comprising the step of co-extruding at least one layer A with at least one layer B to form said multilayer film, wherein said least one layer A comprises poly(butylene adipate-co-terephthalate) and an aliphatic polyester selected from polylactic acid, polyhydroxyalkanoate, polycaprolactone, and polyesteramides; and wherein said at least one layer B comprises poly(butylene adipate-co-terephthalate); and
   wherein said layer A comprises at least 15% by weight of poly(butylene adipate-co-terephthalate) based on the total weight of layer A and at least 60% by weight of aliphatic polyester based on the total weight of layer A; and
   wherein said layer B comprises from 70 to 100% by weight of poly(butylene adipate-co-terephthalate) based on the total weight of layer B.
24. Use of at least one multilayer film according to any one of statements 1 to 9, 16 to 22, as lamination films, cling films, stretch films, shrink films, bags, liners and diaper films.
25. Use of at least one multilayer film according to any one of statements 1 to 9, 16 to 22, for coating and/or laminating a substrate.
26. A substrate coated with at least one multilayer film according to any one of statements 1 to 9, 16 to 22.
27. The substrate according to statement 13 or 26, further comprising an adhesive layer between said multilayer film and said substrate.
28. The substrate according to statement 14 or 27 wherein said adhesive is selected from the group comprising epoxy adhesive, polyurethane adhesive; nitro-cellulosic adhesive; or polyester adhesive.
29. The multilayer film according to any one of statements 1 to 9, 16 to 22, wherein layer A comprises at least 15% by weight of PBAT based on the total weight of layer A; for example at least 20% by weight of PBAT, for example at least 21%, for example at least 22%, for example at least 23%, for example at least 24%, for example at least 25%, for example at least 26%, for example at least 27%, for example at least 28%, for example at least 29%, for example at least 30% by weight of PBAT based on the total weight of layer A.
30. The multilayer film according to any one of statements 1 to 9, 16 to 22, 29, wherein layer A layer A comprises at least 30 % by weight of PBAT based on the total weight of layer A and at least 60% by weight of aliphatic polyester based on the total weight of layer A.
31. The multilayer film according to any one of statements 1 to 9, 16 to 22, 29, 30, wherein layer A comprises at least 65%, for example at least 70%, by weight of aliphatic polyester based on the total weight of layer A.
32. The multilayer film according to any one of statements 1 to 9, 16 to 22, 29 to 31, wherein layer A comprises at least 15 % by weight of PBAT based on the total weight of layer A and at least 60% by weight of polylactic acid based on the total weight of layer A, for example, layer A comprises at least 30 % by weight of PBAT based on the total weight of layer A and at least 60% by weight of polylactic acid based on the total weight of layer A.
33. The multilayer film according to any one of statements 1 to 9, 16 to 22, 29 to 32, wherein layer B of the multilayer film according to the present invention, is preferably adjacent to layer A.
34. The multilayer film according to any one of statements 1 to 9, 16 to 22, 29 to 33, wherein the multilayer film comprises
   - at least one layer A comprising:
      at least 30% by weight of PBAT based on the total weight of layer A, and
      at least 70% by weight of polylactic acid based on the total weight of layer A; and
   - at least one layer B comprising:
      from 70 to 100% by weight of PBAT based on the total weight of layer B, and
      from 0 to 30% by weight of PLA based on the total weight of layer B.
35. The substrate according to any one of statements 13 to 15 or 26 to 28, wherein the substrate is selected from the group comprising metal-comprising substrate; alloys; lignocellulosic substrate; polymeric substrate; metal oxide substrate; glass; ceramic; composites; and mixture thereof.
36. The substrate according to any one of statements 13 to 15 or 26 to 28, 35, wherein the substrate is coated with the multilayer film with layer B being adjacent to the substrate. In this embodiment, layer B is then the inner layer and layer A the outer layer.
37. The substrate according to any one of statements 13 to 15 or 26 to 28, 35, 36, wherein an adhesive is provided between the substrate surface and layer B.
38. The substrate according to statement 37 wherein said adhesive can be selected from the group comprising epoxy adhesive, polyurethane adhesive; nitro-cellulosic adhesive; or polyester adhesive.
39. A panel comprising a skin plate and a multilayer film according to any one of statements 1 to 9, 16 to 22, 29 to 33, which is applied to the latter.
40. The panel according to statement 39, wherein the skin plate is provided with a coating or adhesive for bonding the multilayer film to the skin plate.
41. The panel according to statement 39 or 40, wherein the skin plate is produced from metal.

The present invention relates to a multilayer film comprising:
- at least one layer A comprising poly(butylene adipate-co-terephthalate) (PBAT) and an aliphatic polyester selected from polylactic acid (PLA), polyhydroxyalkanoate, polycaprolactone, and polyesteramides; preferably said at least one layer A comprises PBAT and PLA; and
- at least one layer B: comprising PBAT.

Preferably, the present invention provides a multilayer film comprising:
- at least one layer A comprising PBAT and an aliphatic polyester selected from polylactic acid, polyhydroxyalkanoate, polycaprolactone, and polyesteramides; wherein said layer A comprises at least 15% by weight of PBAT based on the total weight of layer A and at least 60% by weight of aliphatic polyester based on the total weight of layer A; preferably said at least one layer A comprises at least 15% by weight of PBAT based on the total weight of layer A and at least 60% by weight of PLA based on the total weight of layer A; and
- at least one layer B comprising from 70 to 100% by weight of PBAT based on the total weight of layer B.

According to the present invention layer A comprises PBAT and an aliphatic polyester.

As used herein, the terms "PBAT" or "poly(butylene adipate-co-terephthalate)" are used interchangeably and refer to polymers encompassing random copolymer of butylenes, adipate and terephthalate. Poly(butylene adipate-co-terephthalate) suitable for layer A can be prepared according to any method known in the state of the art. For example, poly(butylene adipate-co-terephthalate) can be prepared by polycondensation between 1,4-butanediol and a mixture of adipic acid and terephthalic acids. Non-limiting commercial examples include Ecoflex® (BASF); Origo-Bi® (Novamont); EnPOL™ G8060 and EnPOL™ 8000 by Ire Chemical Ltd of Seoul.

In an embodiment, layer A comprises at least 10% by weight of PBAT based on the total weight of layer A. Preferably, at least 15% by weight of PBAT based on the total weight of layer A; for example at least 20% by weight of PBAT, for example at least 21%, for example at least 22%, for example at least 23%, for example at least 24%, for example at least 25%, for example at least 26%, for example at least 27%, for example at least 28%, for example at least 29%, preferably at least 30% by weight of PBAT based on the total weight of layer A.

According to the present invention, layer A comprises also an aliphatic polyester selected from the group comprising polylactic acid, polyhydroxyalkanoate, polycaprolactone, and polyesteramides.

In an embodiment, layer A comprises at least 50%, for example at least 55%, for example at least 60%, for example at least 65%, for example at least 70%, by weight of aliphatic polyester based on the total weight of layer A.

In an embodiment, layer A comprises at least 15 % by weight of PBAT based on the total weight of layer A and at least 60% by weight of the aliphatic polyester based on the total weight of layer A. In a preferred embodiment, layer A comprises at least 30 % by weight of PBAT based on the total weight of layer A and at least 60% by weight of aliphatic polyester based on the total weight of layer A.

Preferably said aliphatic polyester is polylactic acid. As used herein, the terms "polylactic acid" or "polylactide" or "PLA" are used interchangeably and refer to polylactic acid polymers comprising repeat units derived from lactic acid.

Polylactic acid suitable for layer A can be prepared according to any method known in the state of the art. The polylactic acid can be prepared by ring-opening polymerization of raw materials having required structures selected from lactide, which is a cyclic dimer of lactic acid, glycolide, which is a cyclic dimer of glycolic acid, and caprolactone and the like. Lactide includes L-lactide, which is a cyclic dimer of L-lactic acid, D-lactide, which is a cyclic dimer of D-lactic acid, meso-lactide, which is a cyclic dimer of D-lactic acid and L-lactic acid, and DL-lactide, which is a racemate of D-lactide and L-lactide. The polylactic acid used in layer A can be derived from L-lactic acid, D-lactic acid, meso-lactide, or a mixture thereof. A mixture of two or more polylactic acid polymers can be used.

Polylactic acid for use in layer A can be prepared according to any known method such as the process described in documents WO1998/002480, WO 2010/081887, FR2843390, US5053522, US 5053485, or US5117008.

In an embodiment, the polylactic acid can be obtained by polymerizing lactide, in the presence of a suitable catalyst and optionally in the presence of a compound of formula (I), acting as a co-initiator and transfer agent of the polymerization,

R¹-OH (I)

wherein R¹ is selected from the group consisting of C₁₋₂₀alkyl, C₆₋₃₀aryl, and C₆₋₃₀arylC₁₋₂₀alkyl optionally substituted by one or more substituents selected from the group consisting of halogen, hydroxyl, and C₁₋₆alkyl. Preferably, R¹ is selected from C₃₋₁₂alkyl, C₆₋₁₀aryl, and C₆₋₁₀arylC₃₋₁₂alkyl, optionally substituted by one or more substituents, each independently selected from the group consisting of halogen, hydroxyl, and C₁₋₆alkyl; preferably, R¹ is selected from C₃₋₁₂alkyl, C₆₋₁₀aryl, and C₆₋₁₀arylC₃₋₁₂alkyl, optionally substituted by one or more substituents, each independently selected from the group consisting of halogen, hydroxyl and C₁₋₄alkyl. The alcohol can be a polyol such as diol, triol or higher functionality polyhydric alcohol. The alcohol may be derived from biomass such as for instance glycerol or propanediol or any other sugar-based alcohol such as for example erythritol. The alcohol can be used alone or in combination with another alcohol.

In an embodiment, non-limiting examples of initiators include 1-octanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, said compound of formula (I) is selected from 1-octanol, isopropanol, and 1,4-butanediol.

The polylactic acid structure can be of the following types in terms of chain termination:
R-OH and R-COOH, with R being the polylactic acid chain, obtainable when using monoalcohol as co-initiator,
HO-R-OH and HOOC-R-COOH obtainable when using diol as co-initiator,
or multiple OH (e.g. 5), obtainable when using triol or higher functionality polyhydric alcohol as co-initiator,

The polylactic acid for use in layer A may comprise the product of polymerization reaction of a racemic mixture of L-lactides and D-lactides, also known as poly-DL-lactide (PDLA). The polylactic acid for use in layer A may comprise the product of polymerization reaction of mainly D-lactides, also known as poly-D-lactide (PDLA). Preferably, The polylactic acid for use in layer A may comprise the product of polymerization reaction of mainly L-lactides (or L,L-lactides), also known as poly-L-lactide (PLLA). Other suitable polylactic acid can be copolymers of PLLA with some D lactic acid units. PLLA-PDLA stereocomplexes, as described for example in WO 2010/097463, can also be used. The polylactic acid for use in layer A may comprise the product of polymerization reaction of meso-lactides.

The polylactic acid for use in layer A may be amorphous PLA, crystalline PLA, or a blend of crystalline and amorphous PLA.

In some embodiment, the polylactic acid can have a weight average molecular weight (Mw) ranging between 30.000 and 500.000 g/mol, more preferably between 50.000 and 400.000 g/mol, even more preferably between 70.000 and 300.000 g/mol. The weight average molecular weight can be measured by chromatography by gel permeation compared to a standard polystyrene in chloroform at 30°C. In an embodiment, the ratio of the weight average molecular weight (Mw) to the number average molecular weight (Mn) is generally from 1.0 to 5.0.

In an embodiment, the polylactic acid may have a density of from 1.228 g/cm³ to 1.269 g/cm³, for example from 1.230 g/cm³ to 1.260 g/cm³, for example from 1.235 g/cm³ to 1.260 g/cm³ (as determined in accordance with ASTM D792).

In an embodiment, the polylactic acid may exhibit a crystalline melt temperature (Tc) of from 140°C to 190°C, for example from 145°C to 185°C, for example from 150°C to 180°C (as determined in accordance with ASTM D3418).

In an embodiment, the polylactic acid may exhibit a glass transition temperature (Tg) of from 45°C to 85°C, for example from 50°C to 80°C, for example from 50°C to 70°C (as determined in accordance with ASTM D3417).

In an embodiment, the polylactic acid may exhibit a tensile yield strength of from 4000 psi to 25000 psi, for example from 5000 psi to 10000 psi, for example from 5500 psi to 8500 psi (as determined in accordance with ASTM D638).

In an embodiment, the polylactic acid may exhibit a tensile elongation of from 0.5 % to 10 %, for example from 1.0 % to 8 %, for example from 1.50 % to 6 % (as determined in accordance with ASTM D638).

In an embodiment, the polylactic acid may exhibit a tensile modulus strength of from 3100 MPa to 4000 MPa (as determined in accordance with ISO-527).

In an embodiment, layer A comprises at least 50%, for example at least 55%, for example at least 60%, for example at least 65%, for example at least 70%, by weight of polylactic acid based on the total weight of layer A.

In a preferred embodiment, layer A comprises at least 15 % by weight of PBAT based on the total weight of layer A and at least 60% by weight of polylactic acid based on the total weight of layer A. In a preferred embodiment, layer A comprises at least 30 % by weight of PBAT based on the total weight of layer A and at least 60% by weight of polylactic acid based on the total weight of layer A.

Layer A may further comprise one or more additives selected from the group comprising pigments, dyes, impact modifiers, adhesion promoters, plasticizers, fillers, antioxidants, antistatic agents, antiblocking agents, nucleating agent, and light and heat stabilizers, as well as anti-UV agents such as 2-(2-Hydroxy-5-tert-octylphenyl) benzotriazole commercially available under the name CYASORB® UV-5411 Light Absorber from Cytec.

For example, suitable antioxidants include compounds containing phenol functional groups. One can use antioxidants called "primaries" such as compounds 1,3,5-TRIS(4-tert-butyl-3-hydroxy-2,6-dimethylbenzyl)-1,3,5-triazine-2,4,6- (1 H,3H,5H)-trione, commercially available under the name Cyanox® 1790 from Cytec. One can also use antioxidants called "secondaries" such as compounds containing phosphite functional groups such as Ultranox® 626 from Chemtura, or Irgafos® 168 from BASF.

Other additives which can be used include, for example, fire retardants, lubricants and surfactants, and those additives and modifiers known to the skilled man. These additives and modifiers are used typically to improve the appearance, mechanical and surface properties of the film of the invention.

Illustrative pigments or colorants include titanium dioxide, carbon black, carbon nanotubes, cobalt aluminum oxides such as cobalt blue, and chromium oxides such as chromium oxide green. Pigments such as ultramarine blue, phthalocyanine blue and iron oxide red are also suitable. In some embodiments, the pigments can be provided in a masterbatch (MB) comprising a carrier polymer and the pigments. In a preferred embodiment, the carrier polymer is polylactic acid.

Among plasticizers, one can in particular select those of the family of citrates, in particular citrate esters like citrate of terbutylene (TBC), acetyl tri-n-butyl-citrate (ATBC), or butyrate esters like tri-ethylene glycol di 2-ethyl hexylbutyrate or their mixtures. Preferably, TBC or ATBC are used. Among plasticizers, one can in particular select the adipates, succinates and oligo polylactic acid.

Fillers are preferentially selected from the group of fibrous compositions such as wood fibers, natural fibers, lignocellulosic fibers, glass fibers, metal fibers, carbon fibers, minerals such as clays, kaolin, or nanoparticles such as carbon nanotubes, and powders such as talc.

For example, suitable antioxidants include compounds containing phenol functional groups which are sterically hindered in simple or oligomeric form such as Irganox® MD1024 from BASF. One can also use antioxidants called "secondaries" such as compounds containing phosphite functional groups such as Ultranox® 626 from Chemtura.

Other additives which can be used include for example chain extender such as Joncryl 4300 from BASF or Cesa-Extend from Clariant.

Co- or ter-polymer comprising ethylene or styrene monomer and unsaturated anhydride-, epoxide- or carboxylic acid-containing monomer, can be added to the composition of layer A. Non-limiting examples comprise glycidyl methacrylate grafted polypropylene (PP-g-GMA), epoxy-functionalized polyethylene such as polyethylene co-glycidyl methacrylate (PE-co-GMA), and combinations thereof. Non-limiting examples of suitable epoxy-functionalized polyethylene includes LOTADER® GMA products such as, for example, product LOTADER® AX8840, which is a random copolymer of ethylene and glycidyl methacrylate (PE-co-GMA) having 8% GMA content (as measured by FTIR), or product LOTADER® AX8900 which is a random terpolymer of ethylene, methyl acrylate and glycidyl methacrylate having 8% GMA content, Lotader ®4700 a terpolymer of ethylene, ethylacrylate and maleic anhydride; which are commercially available products from Arkema. Suitable co- or ter-polymer also include the terpolymer of styrene monomer, acrylic esters and glycidyl methacrylate sold under the trademark Joncryl® by BASF.

Layer A can be prepared by contacting PBAT and an aliphatic polyester such as polylactic acid. Any process known in the art can be applied for preparing layer A as presently described.

In some embodiments, said contacting step comprises blending the PBAT, and the aliphatic polyester such as polylactic acid, for example in a single step. The blending may occur by introducing PBAT and the aliphatic polyester such as polylactic acid and optional additives, into a system capable of combining and melting the components. Such blending may comprise dry blending, melt blending, melt compounding, or combinations thereof, by known blending techniques such as mixing and extrusion. For example, the blending may be accomplished by introducing PBAT and the aliphatic polyester such as polylactic acid into a batch mixer, continuous mixer, single screw extruder or twin screw extruder, for example, to form a homogeneous mixture or solution while providing temperature conditions so as to melt the blend components.

Preferably an extrusion process is used. As used herein, the terms "extrusion" or "extrusion process" are used herein as synonyms and refer to the process of transforming a polymer resin into a "polymer product". The process preferably comprises several equipments connected in series, including one or more rotating screws in an extruder, a die, and means for cutting the extruded filaments into pellets. The extruder can have one or more heating means e.g. a jacket to heat the extruder barrels or a hot oil unit. The screw in the extruder can be the vehicle upon which the polyolefin product travels. The shape of the screw can determine, along with the speed at which the screw turns, expressed in rpm, the speed at which the product moves and the pressure attained in the extruder. The screw in the screw mixer can be powered by a motor, preferably an electric motor.

In some embodiment, the polyester, such as polylactic acid, can be blended either in dry form or in the melt with the PBAT and optional additives, to create the composition required for layer A.

For example, the polylactic acid, the PBAT and the additives can be pre-compounded in an extruder such as a twin screw extruder and pellets are produced. Suitable extrusion temperature can be ranging from 140°C to 220°C.

According to the present invention layer B comprises PBAT.

The description of PBAT present in layer A applies *mutatis mutandis* to the PBAT in layer B. PBAT suitable for layer B can be prepared according to any method known in the state of the art. For example, PBAT can be prepared by polycondensation between 1,4-butanediol and a mixture of adipic acid and terephthalic acids. Non-limiting commercial examples include Ecoflex® (BASF); Origo-Bi® (Novamont); EnPOL™ G8060 and EnPOL™ 8000 by Ire Chemical Ltd of Seoul.

In an embodiment, layer B comprises from 50 to 100% by weight of PBAT based on the total weight of layer B. Preferably, layer B comprises from 60 to 100% by weight of PBAT based on the total weight of layer B. More preferably, layer B comprises from 70% to 100% by weight of PBAT based on the total weight of layer B. Most preferably, layer B comprises from 80% to 100% by weight of PBAT based on the total weight of layer B.

Layer B of the multilayer film according to the present invention, is preferably adjacent to layer A.

In some embodiments, layer B of the multilayer film further comprises one or more polymers selected from an aliphatic polyester; co- or ter-polymer comprising ethylene or styrene monomer, and unsaturated anhydride-, epoxide- or carboxylic acid-containing monomer; wherein said aliphatic polyester is selected from polylactic acid, polyhydroxyalkanoate, polycaprolactone, and polyesteramides. Preferably, layer B comprises an aliphatic polyester, more preferably, the aliphatic polyester present in layer B is PLA.

The description of PLA present in layer A applies *mutatis mutandis* to the PLA in layer B. Polylactic acid suitable for layer B can be prepared according to any method known in the state of the art, as described above for the PLA suitable for layer A.

The polylactic acid which can be used in layer B may be amorphous PLA, crystalline PLA, or a blend of crystalline and amorphous PLA. The polylactic acid which can be used in layer B can have a weight average molecular weight (Mw) ranging between 30.000 and 500.000 g/mol, more preferably between 50.000 and 400.000 g/mol, even more preferably between 70.000 and 300.000 g/mol. The polylactic acid which can be used in layer B can have a Mw/Mn ranging from 1.0 to 5.0. The polylactic acid which can be used in layer B can have a density of from 1.228 g/cm³ to 1.269 g/cm³, for example from 1.230 g/cm³ to 1.260 g/cm³, for example from 1.235 g/cm³ to 1.260 g/cm³ (as determined in accordance with ASTM D792). The polylactic acid which can be used in layer B can have a tensile yield strength of from 27.6 MPa to 172.4 MPa (4000 psi to 25000 psi) for example from 34.4 MPa to 68.8 MPa (5000 psi to 10000 psi), for example from 37.9 MPa to 58.6 MPa (5500 psi to 8500 psi) (as determined in accordance with ASTM D638).The polylactic acid which can be used in layer B can have a tensile elongation of from 0.5 % to 10 %, for example from 1.0 % to 8 %, for example from 1.50 % to 6 % (as determined in accordance with ASTM D638). The polylactic acid which can be used in layer B can have a tensile modulus strength of from 3100 MPa to 4000 MPa (as determined in accordance with ISO-527).

In some embodiments, layer B of the multilayer film comprises from 0 to 50% by weight of one or more polymers based on the total weight of layer B, wherein said one or more polymers can be selected from the group comprising an aliphatic polyester; co- or terpolymer comprising ethylene or styrene monomer, and unsaturated anhydride-, epoxide-or carboxylic acid-containing monomer. In some embodiments, layer B comprises from 0 to 50% by weight of an aliphatic polyester based on the total weight of layer B. In some preferred embodiments, layer B comprises from 0 to 50% by weight of polylactic acid based on the total weight of layer B. Preferably, layer B comprises from 0 to 40% by weight of polylactic acid based on the total weight of layer B. Most preferably, layer B comprises from 0 to 30% by weight of polylactic acid based on the total weight of layer B. For example layer B comprises from 0 to 25% by weight of polylactic acid based on the total weight of layer B. For example layer B comprises from 0 to 20% by weight of polylactic acid based on the total weight of layer B.

In an embodiment, layer B of the multilayer film comprises from 50 to 100% by weight of PBAT based on the total weight of layer B, and from 0 to 50% by weight of PLA based on the total weight of layer B. Preferably, layer B comprises from 60 to 100% by weight of PBAT based on the total weight of layer B, and from 0 to 40% by weight of PLA based on the total weight of layer B. Most preferably, layer B comprises from 70% to 100% by weight of PBAT based on the total weight of layer B, and from 0 to 30% by weight of PLA based on the total weight of layer B. For example layer B comprises from 80% to 100% by weight of PBAT based on the total weight of layer B, from 0 to 20% by weight of PLA based on the total weight of layer B. For example layer B comprises from 90% to 100% by weight of PBAT based on the total weight of layer B, from 0 to 10% by weight of PLA based on the total weight of layer B.

In an embodiment, layer B of the multilayer film comprises from 50 to 99% by weight of PBAT based on the total weight of layer B, and from 1 to 50% by weight of PLA based on the total weight of layer B. Preferably, layer B comprises from 60 to 99% by weight of PBAT based on the total weight of layer B, and from 1 to 40% by weight of PLA based on the total weight of layer B. Most preferably, layer B comprises from 70% to 99% by weight of PBAT based on the total weight of layer B, and from 1 to 30% by weight of PLA based on the total weight of layer B. For example layer B comprises from 80% to 99% by weight of PBAT based on the total weight of layer B, from 1 to 20% by weight of PLA based on the total weight of layer B. For example layer B comprises from 90% to 99% by weight of PBAT based on the total weight of layer B, from 1 to 10% by weight of PLA based on the total weight of layer B.

Co- or ter-polymer comprising ethylene or styrene monomer and unsaturated anhydride-, epoxide- or carboxylic acid-containing monomer, can be added to the composition of layer B. Non-limiting examples comprise glycidyl methacrylate grafted polypropylene (PP-g-GMA), epoxy-functionalized polyethylene such as polyethylene co-glycidyl methacrylate (PE-co-GMA), and combinations thereof. Non-limiting examples of suitable epoxy-functionalized polyethylene includes LOTADER® GMA products such as, for example, product LOTADER® AX8840, which is a random copolymer of ethylene and glycidyl methacrylate (PE-co-GMA) having 8% GMA content (as measured by FTIR), or product LOTADER® AX8900 which is a random terpolymer of ethylene, methyl acrylate and glycidyl methacrylate having 8% GMA content, Lotader ®4700 a terpolymer of ethylene, ethylacrylate and maleic anhydride; which are commercially available products from Arkema. Suitable co- or ter-polymer also include the terpolymer of styrene monomer, acrylic esters and glycidyl methacrylate sold under the trademark Joncryl® by BASF.

In some embodiments, the multilayer film comprises
- at least one layer A comprising
   at least 10% by weight of PBAT based on the total weight of layer A, and
   at least 50% by weight of an aliphatic polyester based on the total weight of layer A, wherein the aliphatic polyester is selected from the group comprising polylactic acid, polyhydroxyalkanoate, polycaprolactone, and polyesteramides; and
- at least one layer B comprising from 50 to 100% by weight of PBAT based on the total weight of layer B.

In some preferred embodiments, the multilayer film comprises
- at least one layer A comprising
   at least 10% by weight of PBAT based on the total weight of layer A, and
   at least 50% by weight of polylactic acid based on the total weight of layer A; and
- at least one layer B comprising from 50 to 100% by weight of PBAT based on the total weight of layer B.

In some preferred embodiments, the multilayer film comprises
- at least one layer A comprising:
   at least 15% by weight of PBAT based on the total weight of layer A, and
   at least 60% by weight of polylactic acid based on the total weight of layer A; and
- at least one layer B comprising:
   from 60 to 100% by weight of PBAT based on the total weight of layer B, and
   from 0 to 40% by weight of PLA based on the total weight of layer B.

In some preferred embodiments, the multilayer film comprises
- at least one layer A comprising:
   at least 15% by weight of PBAT based on the total weight of layer A, and
   at least 60% by weight of polylactic acid based on the total weight of layer A; and
- at least one layer B comprising:
   from 60 to 99% by weight of PBAT based on the total weight of layer B, and
   from 1 to 40% by weight of PLA based on the total weight of layer B.

In some preferred embodiments, the multilayer film comprises
- at least one layer A comprising:
   at least 30% by weight of PBAT based on the total weight of layer A, and
   at least 70% by weight of polylactic acid based on the total weight of layer A; and
- at least one layer B comprising:
   from 70 to 100% by weight of PBAT based on the total weight of layer B, and
   from 0 to 30% by weight of PLA based on the total weight of layer B.

In some preferred embodiments, the multilayer film comprises
- at least one layer A comprising:
   at least 30% by weight of PBAT based on the total weight of layer A, and
   at least 70% by weight of polylactic acid based on the total weight of layer A; and
- at least one layer B comprising:
   from 70 to 99% by weight of PBAT based on the total weight of layer B, and
   from 1 to 30% by weight of PLA based on the total weight of layer B.

The thickness of each layer of the film and of the overall film, are not particularly limited, but are determined according to the desired properties of the film. Preferably each film layer has a thickness of about 1 to 750 µm, more preferably 1 to 500 µm and most preferably about 1 to 100 µm, depending on the final application of the multilayer film. For example, the layer comprising PBAT may need to be thicker or thinner to get the desired mechanical and physical properties. The thickness of each layer can be adjusted to achieve the desired result.

Preferably, the multilayer film has an overall thickness of 1 to 1000 µm, more preferably 1 to 500 µm and even more preferably 10 to 300 µm. Most preferably, the multilayer film is 100 to 200 µm thick.

The present invention also encompasses a process for preparing a multilayer film as described previously; any process known in the art can be applied for preparing a multilayer film as presently described. The multilayer film is preferably prepared by coextruding the resin or resin blend of each layer, so that upon extrusion they adhere together to form the multilayer film. Co-extrusion is a process well-known to the skilled person.

In an embodiment, the co-extrusion can be carried out at a temperature range between 120°C and 220°C.

In an embodiment, the process for producing a multilayer film according to the invention comprises the steps of:
a) preparing a blend comprising PBAT and an aliphatic polyester such as PLA,
b) coextruding the blend of step a) with a blend comprising PBAT.

Preferably, the process for preparing a multilayer film according to the first aspect of the invention comprises the step of co-extruding at least one layer A with at least one layer B to form said multilayer film, wherein said least one layer A comprises poly(butylene adipate-co-terephthalate) and an aliphatic polyester selected from polylactic acid, polyhydroxyalkanoate, polycaprolactone, and polyesteramides; and wherein said at least one layer B comprises poly(butylene adipate-co-terephthalate); and
wherein said layer A comprises at least 15% by weight of poly(butylene adipate-co-terephthalate) based on the total weight of layer A and at least 60% by weight of aliphatic polyester based on the total weight of layer A; and
wherein said layer B comprises from 70 to 100% by weight of poly(butylene adipate-co-terephthalate) based on the total weight of layer B.

For example, a pre-compound of PLA with PBAT and optional additives can be prepared in a twin screw extruder, thereby preparing pellets and these pellets can then be used in co-extrusion as layer A with PBAT as layer B. Suitable temperature can range from 140°C to 220°C for layer A and from 120°C to 200°C for layer B.

In an embodiment, the coextrudate of step b) can be blown or cast to prepare a blown or a cast multilayer film.

The multilayer film of the present invention may be formed by any number of well-known coextrusion techniques to make a cast or blown film. Any of the blown or chill roll techniques commonly used are suitable. For example, the resins of each layer can be co-extruded in a molten state through a slot die and then cooled to form the multilayer film. Alternatively, the resins of each layer can be co-extruded in a molten state through an annular die and then blown and cooled to form a tubular, blown film, which can then be axially slit and unfolded to form a flat multilayer film.

According to one embodiment, multilayer cast films can be prepared using a pilot scale commercial cast film line machine as follows. Pellets of the respective polymers or polymer blends are melted at a temperature ranging from about 120°C to 220°C, with the specific melt temperature being chosen to match melt viscosities of the particular resins. In the case of a multilayer cast film, the two or more different melts are conveyed to a coextrusion adapter that combines the two or more melt flows into a multilayer, coextruded structure. This layered flow is distributed through a single manifold film extrusion die to the desired width. The die gap opening is typically within the range of 250 to 750µm. The material is then drawn down to the final gauge. The material draw down ratio is preferably 15:1 to 25:1, more preferably about 21:1 for 20 µm films. A vacuum box or air knife can be used to pin the melt exiting the die opening to a primary chill roll maintained at a temperature less than 35°C. The resulting polymer film is collected on a winder. The film thickness can be monitored by a gauge monitor, and the film can be edge trimmed by a trimmer. One or more optional treaters can be used to surface treat the film, if desired. Such chill roll casting processes and apparatus are well known in the art, and are described, for example, in The Wiley Encyclopedia of Packaging Technology, Second Edition, A. L. Brody and K. S. Marsh, Ed., John Wiley and Sons, Inc., New York (1997). Although chill roll casting is one example, other forms of casting can be used.

According to another embodiment, multilayer blown films can be prepared as follows. The multilayer film can be for instance produced using a blown film line using a coextrusion feedblock and die assembly to yield a film with two or more layers adhered together but differing in composition. In some embodiments, the die can have a die gap of 1.0-2.0 mm. The blow-up ratio (BUR) can range from 1.0 to 10.0, preferably from 1.0 to 5.0. The film can then be extruded through the coextrusion feedblock and die assembly into a film and cooled, for example by blowing air onto the surface of the film. In industrial processes, the film is then preferably drawn from the die to form a cylindrical film that is cooled, collapsed and optionally subjected to a desired auxiliary process, such as slitting, treating, sealing or printing. The finished multilayer film can be wound into rolls for later processing and converting.

In yet another embodiment of the invention, a multilayer film may also be formed by extrusion coating whereby a substrate material is contacted with the hot molten polymer as the polymer exits the die. Either the resin comprising PBAT and an aliphatic polyester d) or the resin comprising PBAT can be used as the substrate material i.e. the initial layer onto which the coating is applied. For instance, an already formed PBAT/aliphatic polyester-comprising film may be extrusion coated with PBAT, as the latter is extruded through the die or vice versa. Extrusion coatings are preferably processed at higher temperatures than cast films in order to promote adhesion of the extruded material to the substrate. Other extrusion coating processes are known in the art.

Alternatively, the multilayer film can be obtained using tubular water quench extrusion processes.

Due to the improved mechanical properties stemming from the presence of a layer of PBAT, as well as the presence in the second layer of material from renewable resources resulting from the presence of aliphatic polyester such as PLA, a multilayer film of superior quality can be obtained, where surprisingly the two layers are compatible and adhere well to one another.

There are many potential applications for the multilayer films produced. These multilayer films can be made into other forms, such as tape, by any one of a number of well-known cutting, slitting, and/or rewinding techniques. They may be useful as stretch, sealing, or oriented films.

Multilayer films according to the invention can be used as lamination films, cling films, stretch films, shrink films, bags, liners, diaper films, candy wrappers or for a variety of other suitable end-use applications that will be apparent to those skilled in the art. The films can also be applied in packaging material, such as for bundling and unitizing a variety of products; flexible food packaging, including frozen food packaging; bags, such as trash bags and bin liners, industrial liners, shipping sacks and produce bags; and surface protection applications, with or without stretching, such as in the temporary protection of surfaces during manufacturing or transportation.

Preferably, the invention encompasses the use of the multilayer film, for coating and/or laminating a substrate. In an embodiment, the substrate is selected from the group comprising metal-comprising substrate; alloys; lignocellulosic substrate, such as wood; polymeric substrate; metal oxide substrate; glass; ceramic; composites; or mixture thereof.

In an embodiment, the substrate is coated with the multilayer film with layer B being adjacent to the substrate. In this embodiment, layer B is then the inner layer and layer A the outer layer.

The coating process can be performed by any method known in the art. For example coating can be performed by thermo-compression between two rubber rolls calender. Coating can also be performed by adhering the multilayer film of the present invention to the substrate with an adhesive. The adhesive can be applied in any method known in the art; for example, the adhesive can be applied in solution or in hot melt. In an embodiment, the substrate according to the present invention further comprises an adhesive layer between said multilayer film and said substrate. In some embodiments, said adhesive can be a functionalized or not functionalized adhesive. In an embodiment, said adhesive can be selected from the group comprising epoxy adhesive, polyurethane adhesive; nitro-cellulosic adhesive; or polyester adhesive.

The present invention also encompasses a substrate coated with a multilayer film according to the invention. Preferably, the substrate is coated with the multilayer film with layer B being adjacent to the substrate. In this embodiment, layer B is then the inner layer and layer A the outer layer. In an embodiment, an adhesive is provided between the substrate surface and layer B. In an embodiment, said adhesive can be selected from the group comprising epoxy adhesive, polyurethane adhesive; nitro-cellulosic adhesive; or polyester adhesive.

The invention also encompasses a panel comprising a skin plate and a multilayer film according to the invention, which is applied to the latter. In an embodiment, the skin plate is provided with a coating or adhesive for bonding the multilayer film to the skin plate. The invention also relates to a method for producing a panel of this type and to a skin plate for forming such a panel.

The skin plates may consist of all kinds of materials, such as plastic, paper or metal. The skin plate is preferably produced from metal, since a metal skin plate imparts great strength and rigidity to the panel. The metal skin plate preferably comprises of steel or aluminum. The steel materials can include cold-rolled steel, hot-rolled steel, stainless steel, zinc plated steel, zinc-aluminum alloy plated steel, zinc-iron alloy plated steel, zinc-magnesium alloy plated steel, and aluminum plated steel, materials fabricated from the preceding steel materials, and materials obtained by combination of the preceding fabricated materials.

The present invention also encompasses a process for producing a panel described above, comprising the following steps:
providing a plate, such as a metal plate, for forming a skin plate;
   - applying an adhesive to the plate;
   - applying at least one multilayer film according to the invention to the plate.

In some preferred embodiment, the process comprises the steps of:
providing a metal plate, for forming a skin plate;
   - applying an adhesive to the metal plate;
   - applying at least one multilayer film according to the invention to the metal plate.

According to a preferred embodiment, the process is carried out continuously. In an embodiment, the (preferably metal) plate is supplied in coil form, is coated on the coil with an adhesive, after which the coil is unwound, and then the multilayer film is applied to the plate.

Preferably, the plate is coated with the multilayer film with layer B being adjacent to the strip. In this embodiment, layer B is then the inner layer and layer A the outer layer. In an embodiment, an adhesive is provided between the plate surface and layer B. In an embodiment, said adhesive can be selected from the group comprising epoxy adhesive, polyurethane adhesive; nitro-cellulosic adhesive; or polyester adhesive.

The present invention can be further illustrated by the following examples, although it will be understood that these examples are included merely for purposes of illustration and are not intended to limit the scope of the invention unless otherwise specifically indicated.

### EXAMPLES

The examples described hereunder illustrate the properties of multilayer film and substrates coated with multilayer film, according to embodiments of the present invention.

Unless otherwise indicated, all parts and all percentages in the following examples, as well as throughout the specification, are parts by weight or percentages by weight respectively.

### Example 1: preparation of a multilayer film according to an embodiment of the invention

A pre-compound comprising
65% by weight of NatureWorks PLA4060D, a commercially available amorphous PLA resin,
30% PBAT, and
5% black MB, a commercial black pigment provided as a masterbatch in PLA,
has been extruded on a twin-screw at temperature ranging from 160 to 220°C. This compound has been used as layer A in a co-extruder. Layer B was 100% PBAT. Ecoflex® F Blend C1200 from BASF was used as PBAT. Extruder A for layer A was heated from 140 to 220°C while extruder B for layer B was heated from 120 to 200 °C. Co-extruded layer A/B (100µm/100µm) was calendered between two roll at 20 to 60°C to give a glossy aspect to layer A.

### Example 2:

The adhesion of layer B to a metal plate was assessed using a two rubber roll calender machine. The adhesion performance was compared with other type of polymers. The results are shown in Table 1. Ecoflex® F Blend C1200 from BASF was used as PBAT. NatureWorks PLA4060D, a commercially available amorphous PLA resin, was used as PLA.

Adhesion was tested using the following procedure: After glue activation at 200 to 240°C, glued metal was pressed on the multilayer film under two rubber rolls and quickly cooled in a water bath. A scratch having the following hash shape # was made with a cutter, just on film layer. Embossing at high velocity was performed on the scratched area. A knife was then used to manually try to remove the film from the metal thereby assessing the adhesion.

**Table 1.**

| Formulation | Adhesion to metal plate using an epoxy adhesive |
|---|---|
| Layer B: 100% PBAT | Yes |
| Layer B: 30% PLA + 70% PBAT | Yes |
| Poly(butylene succinate) | No |
| Poly(butylene succinate-co-adipate) | No |
| Lotader AX8900 | No |

### Example 3: Preparation of multilayer films according to the invention and comparative examples

Different combinations of layer A and B were co-extruded to confirm level of adhesion between the two layers. The compositions and the results are shown in Table 2. Ecoflex® F Blend C1200 from BASF was used as PBAT. NatureWorks PLA4060D, a commercially available amorphous PLA resin, was used as PLA.

When mixtures were used, a pre-compound was extruded on a twin-screw at a temperature ranging from 140 to 220°C. This compound was used as layer A in a co-extruder. The same procedure was used for layer B. The co-extruder was heated from 140 to 220°C while extruder B for layer B was heated from 120 to 220 °C. Co-extruded layer A/B (100µm/100µm) was calendered between two roll at 20 to 60°C to give a glossy aspect to layer A.

**Table 2. Co-extrusion results.**

| **Multilayer film** | **Composition Layer A** | **Composition Layer B** | **Results** |
|---|---|---|---|
| Comparative 1 | 90 wt% PLA + 10% wt Lotader®AX8900 | 100wt% Lotader®AX8900 | Medium sticking of layers |
| Comparative 2 | 100wt%PLA | 100wt%PBAT | Layers do not stick |
| Film 1 According to the invention | 70 wt% PLA + 30% wt PBAT | 100wt% PBAT | Very good sticking of layers |
| Film 2 According to the invention | 85 wt% PLA + 15% wt PBAT | 100wt%PBAT | Good sticking of layers |
| Film 3 According to the invention | 82 wt% PLA + 15% wt PBAT + 3% wt Tributyl citrate | 100wt% PBAT | Good sticking of layers |
| Comparative 3 | 100wt% PLA | 100wt% starch | Good sticking but bad smelt |

### Example 4: Coating of a metallic substrate.

The multilayer films 1, 2 and 3 prepared in example 3 were used for laminating a metallic substrate, using a two rubber roll calender machine; and subsequently subjected to embossing to test the quality of adhesion. The adhesion tests were performed as described in Example 2. The results were compared with comparative films 2 and 3, and are shown in Table 3.

**Table 3**

| **Multilayer film** | **Result** |
|---|---|
| Comparative 2 | Sticking, but PLA-layer delaminates |
| Film 1 | Very good adhesion, even after embossing |
| Film 2 | Very good adhesion, even after embossing |
| Film 3 | Very good adhesion, even after embossing |
| Comparative 3 | sticking on metal but PLA delaminating during embossing |

## Claims

1. A multilayer film comprising:
- at least one layer A comprising poly(butylene adipate-co-terephthalate) and an aliphatic polyester selected from polylactic acid, polyhydroxyalkanoate, polycaprolactone, and polyesteramides; and
- at least one layer B comprising poly(butylene adipate-co-terephthalate),
wherein said layer A comprises at least 15% by weight of poly(butylene adipate-co-terephthalate) based on the total weight of layer A and at least 60% by weight of aliphatic polyester based on the total weight of layer A; and
wherein said layer B comprises from 80 to 100% by weight of poly(butylene adipate-co-terephthalate) based on the total weight of layer B.

2. The multilayer film according to claim 1, wherein said aliphatic polyester in layer A is a polylactic acid.

3. The multilayer film according to any of claims 1 or 2, wherein said layer A comprises at least 15 % by weight of poly(butylene adipate-co-terephthalate) based on the total weight of layer A and at least 60% by weight of polylactic acid based on the total weight of layer A.

4. The multilayer film according to any one of claims 1 to 3, wherein said layer B further comprises one or more polymers selected from an aliphatic polyester; co- or ter-polymer comprising ethylene or styrene monomer, and unsaturated anhydride-, epoxide- or carboxylic acid-containing monomer; and wherein said aliphatic polyester is selected from poly(lactic acid), polyhydroxyalkanoate, polycaprolactone, and polyesteramides.

5. The multilayer film according to claim 4, wherein said aliphatic polyester in layer B is polylactic acid.

6. The multilayer film according to any one of claims 1 to 5, wherein layer A further comprises one or more additives selected from the group comprising pigments, dyes, impact modifiers, adhesion promoters, plasticizers, fillers, antioxidants, UV blockers, antistatic agents, antiblocking agents, or nucleating agent.

7. A process for preparing a multilayer film according to any one of claims 1 to 6; comprising the step of co-extruding at least one layer A with at least one layer B to form said multilayer film, wherein said least one layer A comprises poly(butylene adipate-co-terephthalate) and an aliphatic polyester selected from polylactic acid, polyhydroxyalkanoate, polycaprolactone, and polyesteramides; and wherein said at least one layer B comprises poly(butylene adipate-co-terephthalate); and
wherein said layer A comprises at least 15% by weight of poly(butylene adipate-co-terephthalate) based on the total weight of layer A and at least 60% by weight of aliphatic polyester based on the total weight of layer A; and
wherein said layer B comprises from 80 to 100% by weight of poly(butylene adipate-co-terephthalate) based on the total weight of layer B.

8. Use of at least one multilayer film according to any one of claims 1 to 6 as lamination films, cling films, stretch films, shrink films, bags, liners and diaper films.

9. Use of at least one multilayer film according to any one of claims 1 to 6, for coating and/or laminating a substrate.

10. A substrate coated with at least one multilayer film according to any one of claims 1 to 6.

11. The substrate according to claim 10, further comprising an adhesive layer between said multilayer film and said substrate.

12. The substrate according to claim 11 wherein said adhesive is selected from the group comprising epoxy adhesive, polyurethane adhesive; nitro-cellulosic adhesive; or polyester adhesive.

13. The substrate according to any one of claims 10 to 12, wherein the substrate is selected from the group comprising metal-comprising substrate; alloys; lignocellulosic substrate; polymeric substrate; metal oxide substrate; glass; ceramic; composites; and mixture thereof.

14. A panel comprising a skin plate and a multilayer film according to any one of claims 1 to 6, which is applied to the latter.

## Patentansprüche

1. Mehrschichtfilm, der umfasst:
- zumindest eine Schicht A, die Poly(butylenadipat-co-terephthalat) und einen aliphatischen Polyester umfasst, der aus Polymilchsäure, Polyhydroxyalkanoat, Polycaprolacton und Polyesteramiden ausgewählt ist; und
- zumindest eine Schicht B, die Poly(butylenadipat-co-terephthalat) umfasst,
wobei die Schicht A bezogen auf das Gesamtgewicht der Schicht A zumindest 15 Gew.-% Poly(butylenadipat-co-terephthalat) und bezogen auf das Gesamtgewicht der Schicht A zumindest 60 Gew.-% aliphatischen Polyester umfasst; und
wobei die Schicht B bezogen auf das Gesamtgewicht der Schicht B 80 bis 100 Gew.-% Poly(butylenadipat-co-terephthalat) umfasst.

2. Mehrschichtfilm nach Anspruch 1, wobei der aliphatische Polyester in Schicht A Polymilchsäure ist.

3. Mehrschichtfilm nach einem der Ansprüche 1 oder 2, wobei Schicht A bezogen auf das Gesamtgewicht der Schicht A zumindest 15 Gew.-% Poly(butylenadipat-co-terephthalat) und bezogen auf das Gesamtgewicht der Schicht A zumindest 60 Gew.-% Polymilchsäure umfasst.

4. Mehrschichtfilm nach einem der Ansprüche 1 bis 3, wobei die Schicht B ferner ein oder mehrere Polymere umfasst, die aus einem aliphatischen Polyester; Co- oder Terpolymer, das Ethylen- oder Styrolmonomer und ungesättigtes anhydrid-, epoxid- oder carbonsäurehaltigem Monomer umfasst, ausgewählt sind; und wobei der aliphatische Polyester aus Poly(milchsäure), Polyhydroxyalkanoat, Polycaprolacton und Polyesteramiden ausgewählt ist.

5. Mehrschichtfilm nach Anspruch 4, wobei der aliphatische Polyester in Schicht B Polymilchsäure ist.

6. Mehrschichtfilm nach einem der Ansprüche 1 bis 5, wobei Schicht A ferner einen oder mehrere Zusatzstoffe umfasst, die aus der Gruppe ausgewählt sind, umfassend Pigmente, Farbstoffe, schlagzähigkeitsmodifizierende Mittel, Adhäsionsförderer, Weichmacher, Füllstoffe, Antioxidationsmittel, UV-Blocker, antistatische Mittel, Antiblockademittel oder Keimbildner.

7. Verfahren zum Herstellen eines Mehrschichtfilms nach einem der Ansprüche 1 bis 6; umfassend den Schritt des Coextrudierens zumindest einer Schicht A mit zumindest einer Schicht B, um den Mehrschichtfilm zu bilden, wobei die zumindest eine Schicht A Poly(butylenadipat-co-terephthalat) und einen aliphatischen Polyester umfasst, der aus Polymilchsäure, Polyhydroxyalkanoat, Polycaprolacton und Polyesteramiden ausgewählt ist; und wobei die zumindest eine Schicht B Poly(butylenadipat-co-terephthalat) umfasst; und
wobei die Schicht A bezogen auf das Gesamtgewicht der Schicht A zumindest 15 Gew.-% Poly(butylenadipat-co-terephthalat) und bezogen auf das Gesamtgewicht der Schicht A zumindest 60 Gew.-% aliphatischen Polyester umfasst; und
wobei die Schicht B bezogen auf das Gesamtgewicht der Schicht B 80 bis 100 Gew.-% Poly(butylenadipat-co-terephthalat) umfasst.

8. Verwendung zumindest eines Mehrschichtfilms nach einem der Ansprüche 1 bis 6 als Laminierungsfolie, Klarsichtfolie, Dehnfolie, Schrumpffolie, Beutel, Verkleidungen und Windelfilme.

9. Verwendung zumindest eines Mehrschichtfilms nach einem der Ansprüche 1 bis 6 zur Beschichtung und/oder Laminierung eines Substrats.

10. Substrat, das mit zumindest einem Mehrschichtfilm nach einem der Ansprüche 1 bis 6 beschichtet ist.

11. Substrat nach Anspruch 10, das ferner eine Haftmittelschicht zwischen dem Mehrschichtfilm und dem Substrat umfasst.

12. Substrat nach Anspruch 11, wobei das Haftmittel aus der Gruppe ausgewählt ist, umfassend Epoxidhaftmittel, Polyurethanhaftmittel; nitrocellulosehaltiges Haftmittel; oder Polyesterhaftmittel.

13. Substrat nach einem der Ansprüche 10 bis 12, wobei das Substrat aus der Gruppe ausgewählt ist, umfassend metallumfassendes Substrat; Legierungen; lignocellulosehaltiges Substrat; polymeres Substrat; Metalloxidsubstrat; Glas; Keramik; Verbundstoffe; und eine Mischung davon.

14. Paneel, das eine Hautplatte und einen Mehrschichtfilm nach einem der Ansprüche 1 bis 6 umfasst, der auf letztere aufgebracht ist.

## Revendications

1. Film multicouche comprenant :
- au moins une couche A comprenant du poly(adipate-co-téréphtalate de butylène) et un polyester aliphatique choisi parmi l'acide polylactique, le polyhydroxyalcanoate, la polycaprolactone et les polyesteramides ; et
- au moins une couche B comprenant du poly(adipate-co-téréphtalate de butylène),
dans lequel ladite couche A comprend au moins 15 % en poids de poly(adipate-co-téréphtalate de butylène) sur la base du poids total de la couche A et au moins 60 % en poids de polyester aliphatique sur la base du poids total de la couche A ; et
dans lequel ladite couche B comprend de 80 à 100 % en poids de poly(adipate-co-téréphtalate de butylène) sur la base du poids total de la couche B.

2. Film multicouche selon la revendication 1, dans lequel ledit polyester aliphatique de la couche A est un acide polylactique.

3. Film multicouche selon l'une quelconque des revendications 1 ou 2, dans lequel ladite couche A comprend au moins 15 % en poids de poly(adipate-co-téréphtalate de butylène) sur la base du poids total de la couche A et au moins 60 % en poids d'acide polylactique sur la base du poids total de la couche A.

4. Film multicouche selon l'une quelconque des revendications 1 à 3, dans lequel ladite couche B comprend en outre un ou plusieurs polymères choisis parmi un polyester aliphatique ; un co- ou ter-polymère comprenant un monomère d'éthylène ou de styrène, et un monomère insaturé contenant de l'anhydride, de l'époxyde ou de l'acide carboxylique ; et dans lequel ledit polyester aliphatique est choisi parmi le poly(acide lactique), le polyhydroxyalcanoate, la polycaprolactone et les polyesteramides.

5. Film multicouche selon la revendication 4, dans lequel ledit polyester aliphatique de la couche B est l'acide polylactique.

6. Film multicouche selon l'une quelconque des revendications 1 à 5, dans lequel la couche A comprend en outre un ou plusieurs additifs choisis dans le groupe comprenant les pigments, les colorants, les modificateurs de résistance aux chocs, les promoteurs d'adhérence, les plastifiants, les charges, les antioxydants, les bloqueurs d'UV, les agents antistatiques, les agents anti-adhésion ou les agents de nucléation.

7. Procédé de préparation d'un film multicouche selon l'une quelconque des revendications 1 à 6 ; comprenant l'étape de co-extrusion d'au moins une couche A avec au moins une couche B pour former ledit film multicouche, dans lequel ladite au moins une couche A comprend du poly(adipate-co-téréphtalate de butylène) et un polyester aliphatique choisi parmi l'acide polylactique, le polyhydroxyalcanoate, la polycaprolactone et les polyesteramides ; et dans lequel ladite au moins une couche B comprend du poly(adipate-co-téréphtalate de butylène) ; et
dans lequel ladite couche A comprend au moins 15 % en poids de poly(adipate-co-téréphtalate de butylène) sur la base du poids total de la couche A et au moins 60 % en poids de polyester aliphatique sur la base du poids total de la couche A ; et
dans lequel ladite couche B comprend de 80 à 100 % en poids de poly(adipate-co-téréphtalate de butylène) sur la base du poids total de la couche B.

8. Utilisation d'au moins un film multicouche selon l'une quelconque des revendications 1 à 6 en tant que films pour stratifiés, films plastiques, films étirables, films rétractables, sacs, doublures et films pour couches.

9. Utilisation d'au moins un film multicouche selon l'une quelconque des revendications 1 à 6, pour le revêtement et/ou la stratification d'un substrat.

10. Substrat revêtu d'au moins un film multicouche selon l'une quelconque des revendications 1 à 6.

11. Substrat selon la revendication 10, comprenant en outre une couche adhésive entre ledit film multicouche et ledit substrat.

12. Substrat selon la revendication 11 dans lequel ledit adhésif est choisi dans le groupe comprenant un adhésif de type époxy, un adhésif de type polyuréthane ; un adhésif nitro-cellulosique ; ou un adhésif de type polyester.

13. Substrat selon l'une quelconque des revendications 10 à 12, lequel substrat est choisi dans le groupe comprenant un substrat comprenant du métal ; des alliages ; un substrat lignocellulosique ; un substrat polymère ; un substrat d'oxyde métallique; un verre ; une céramique ; des composites ; et un mélange de ceux-ci.

14. Panneau comprenant une plaque de peau et un film multicouche selon l'une quelconque des revendications 1 à 6, qui est appliqué sur cette dernière.
